# EUROPEAN PATENT APPLICATION

(11) **EP 4 319 069 A1**
(43) Date of publication of application: **07.02.2024**
(21) Application number: 21933890.2
(22) Date of filing: 31.03.2021
(51) Int. Cl.: H04L 12/54

(54) **METHOD AND APPARATUS FOR DETERMINING HYPER FRAME NUMBER OF PACKET DATA CONVERGENCE PROTOCOL ENTITY**

(71) Applicant: Beijing Xiaomi Mobile Software Co., Ltd., Beijing 100085 (CN)
(72) Inventor: JIANG, Xiaowei, Beijing 100085 (CN)
(74) Representative: dompatent von Kreisler Selting Werner - Partnerschaft von Patent- und Rechtsanwälten mbB
(86) International application number: PCT/CN2021/084755
(87) International publication number: WO 2022/205230

(57) **Abstract**

Disclosed in embodiments of the present invention are a method and apparatus for determining a hyper frame number of a packet data convergence protocol entity, which may be applied to the technical field of communications. The method configured to be executed by a terminal device comprises: receiving indication information sent by a network device, wherein the indication information comprises hyper frame number (HFN) information; and determining an HFN value of a packet data convergence protocol (PDCP) entity on the basis of the HFN information. Therefore, the value of an HFN can be kept consistent between a terminal device and a network device, so that data decryption failure or integrity verification failure is avoided, and the reliability of data transmission is improved.

## Description

### TECHNICAL FIELD

The disclosure relates to a field of communication technologies, in particular to a method for determining a hyper frame number (HFN) of a packet data convergence protocol (PDCP) entity and an apparatus for determining a HFN of a PDCP entity.

### BACKGROUND

In a communication system, a network device is constantly sending data. Therefore, a HFN value used by the network device constantly increases. When a new terminal device joins to receive data sent by the network device, the terminal device does not know the HFN value used by the network device. As a result, the terminal device is unable to use a correct count value (COUNT) to decrypt or verify an integrity of the received data, resulting in data decryption failure or data integrity verification failure.

### SUMMARY

Embodiments of the disclosure provide a method for determining a hyper frame number (HFN) of a packet data convergence protocol (PDCP) entity and an apparatus for determining a HFN of a PDCP entity, which can be applied in the field of communication technologies.

In a first aspect, embodiments of the disclosure provide a method for determining a HFN of a PDCP entity, performed by a terminal device. The method includes: receiving indication information sent by a network device, in which the indication information includes HFN information; and determining a HFN value of the PDCP entity based on the HFN information.

In the disclosure, the terminal device first receives the indication information sent by the network device, and determines the HFN value of the PDCP entity based on the HFN information included in the indication information. Therefore, the terminal device having the same understanding of the HFN value as the network device, to avoid a data decryption failure or data integrity verification failure and to improve a reliability of data transmission.

In some embodiments, the HFN information includes any one of the HFN value or a count value (COUNT).

In some embodiments, determining the HFN value of the PDCP entity based on the HFN information includes: in response to an applicable condition of the HFN information being satisfied, determining the HFN value of the PDCP entity based on the HFN information.

In some embodiments, the method further includes:
receiving the applicable condition of the HFN information sent by the network device;
   or,
determining the applicable condition of the HFN information based on a protocol.

In some embodiments, the applicable condition of the HFN information includes any one of a sequence number (SN) value or a system frame number (SFN) value.

In some embodiments, the SN value includes any one of:
a minimum SN value;
a maximum SN value;
the minimum SN value and the maximum SN value;
a section number corresponding to the SN value; or
a parameter pair (m, n) corresponding to the SN value, in which m denotes a number of sections after equally segmenting all the SN values into sections in a specified order" n denotes a section number of a section containing a current SN value among the m sections, and n is an integer less than or equal to m.

In some embodiments, the SFN value includes any one of:
a minimum SFN value;
a maximum SFN value;
the minimum SFN value and the maximum SFN value;
a section number corresponding to the SFN value; or
a parameter pair (i, j) corresponding to the SFN value, in which i denotes a number of sections after equally segmenting all the SFN values into sections in a specified order, j denotes a section number of a section containing a current SFN value among the i sections, and j is an integer less than or equal to i.

In some embodiments, the applicable condition being satisfied includes:
a SN value corresponding to a PDCP data packet received by the terminal device satisfying the applicable condition;
   or,
a SFN value corresponding to the PDCP data packet received by the terminal device satisfying the applicable condition.

In some embodiments, the indication information further includes multicast broadcast service (MBS) service information, and the received PDCP data packet is a first PDCP data packet received by the terminal device from a MBS radio bearer (MRB) corresponding to the MBS service information.

In some embodiments, the SFN value corresponding to the received PDCP data packet includes any one of:
a SFN value corresponding to a time location of a last physical data channel on which the PCDP data packet is successfully received;
a SFN value corresponding to a time location of a first physical data channel on which the PCDP data packet is successfully received; or
the SFN value corresponding to successfully receiving the PDCP data packet.

In some embodiments, the applicable condition is the SN value, and determining the HFN value of the PDCP entity based on the HFN information includes:
in response to the applicable condition not being satisfied and a difference between the SN value corresponding to the PDCP data packet received by the terminal device and the SN value of the applicable condition being s, generating updated HFN information by updating the HFN information based on the difference s; and
determining the HFN value of the PDCP entity based on the updated HFN information.

In some embodiments, the applicable condition is the SFN value, and determining the HFN value of the PDCP entity based on the HFN information includes:
in response to the applicable condition not being satisfied and a difference between the SFN value corresponding to the PDCP data packet received by the terminal device and the SFN value of the applicable condition being k, generating updated HFN information by updating the HFN information based on the difference k; and
determining the HFN value of the PDCP entity based on the updated HFN information.

In some embodiments, the indication information further includes an update mode of the HFN information, and determining the HFN value of the PDCP entity based on the HFN information includes:
in response to the applicable condition not being satisfied, generating updated HFN information by updating the HFN information based on the update mode; and
determining the HFN value of the PDCP entity based on the updated HFN information.

In some embodiments, the update mode includes an update step size and an update direction.

In some embodiments, receiving the indication information sent by the network device includes:
receiving, based on a system message, the indication information sent by the network device;
   or,
receiving, based on a MBS control channel message, the indication information sent by the network device;
   or,
receiving, based on a dedicated configuration message of the terminal device, the indication information sent by the network device.

In some embodiments, the indication information further includes the MBS service information, and determining the HFN value of the PDCP entity based on the HFN information includes:
determining the HFN value of the PDCP entity corresponding to the MBS service information based on the HFN information.

In some embodiments, the MBS service information includes at least one of a MBS service identifier (ID), a MBS bearer ID, or protocol entity configuration information of a MBS bearer.

In some embodiments, the method further includes: decrypting or verifying an integrity of received data corresponding to the MBS service information based on the HFN information.

In some embodiments, determining the HFN value of the PDCP entity based on the HFN information includes: in response to the terminal device being a device newly accessing a MBS service, determining the HFN value of the PDCP entity based on the HFN information.

In a second aspect, embodiments of the disclosure provide another method for determining a HFN of a PDCP entity, performed by a network device. The method includes: sending indication information to a terminal device, in which the indication information includes HFN information.

In some embodiments, the HFN information includes any one of a HFN value or a count value (COUNT).

In some embodiments, the indication information further includes an applicable condition of the HFN information.

In some embodiments, the applicable condition of the HFN information includes any one of a sequence number (SN) value or a system frame number (SFN) value.

In some embodiments, the SN value includes any one of:
a minimum SN value;
a maximum SN value;
the minimum SN value and the maximum SN value;
a section number corresponding to the SN value; or
a parameter pair (m, n) corresponding to the SN value, in which m denotes a number of sections after equally segmenting all the SN values into sections in a specified order, n denotes a section number of a section containing a current SN value among the m sections, and n is an integer less than or equal to m.

In some embodiments, the SFN value includes any one of:
a minimum SFN value;
a maximum SFN value;
the minimum SFN value and the maximum SFN value;
a section number corresponding to the SFN value; or
a parameter pair (i, j) corresponding to the SFN value, in which i denotes a number of sections after equally segmenting all the SFN values into sections in a specified order, j denotes a section number of a section containing a current SFN value among the i sections, and j is an integer less than or equal to i.

In some embodiments, the indication information further includes multicast broadcast service (MBS) service information.

In some embodiments, the MBS service information includes at least one of a MBS service identifier (ID), a MBS bearer ID, or protocol entity configuration information of a MBS bearer.

In some embodiments, the indication information further includes an update mode of the HFN information.

In some embodiments, the update mode includes an update step size and an update direction.

In some embodiments, sending the indication information to the terminal device includes:
sending the indication information to the terminal device based on a system message;
   or,
sending the indication information to the terminal device based on a MBS control channel message;
   or,
sending the indication information to the terminal device based on a dedicated configuration message of the terminal device.

In some embodiments, the method further includes:
in response to an information change in the system message other than the HFN information, sending first change indication information to the terminal device;
   or,
in response to an information change in the MBS control channel message other than the HFN information, sending second change indication information to the terminal device.

In a third aspect, embodiments of the disclosure provide a communication device, configured on a terminal device side. The communication device includes: a transceiver module configured to receive indication information sent by a network device, in which the indication information includes HFN information; and a processing module configured to determine a HFN value of a PDCP entity based on the HFN information.

In some embodiments, the HFN information includes any one of the HFN value or a count value (COUNT).

In some embodiments, the processing module is configured to, in response to an applicable condition of the HFN information being satisfied, determine the HFN value of the PDCP entity based on the HFN information.

In some embodiments, the transceiver module is further configured to receive the applicable condition of the HFN information sent by the network device;
or,
the processing module is further configured to determine the applicable condition of the HFN information based on a protocol.

In some embodiments, the applicable condition of the HFN information includes any one of a sequence number (SN) value or a system frame number (SFN) value.

In some embodiments, the SN value includes any one of:
a minimum SN value;
a maximum SN value;
the minimum SN value and the maximum SN value;
a section number corresponding to the SN value; or
a parameter pair (m, n) corresponding to the SN value, in which m denotes a number of sections after equally segmenting all the SN values into sections in a specified order, n denotes a section number of a section containing a current SN value among the m sections, and n is an integer less than or equal to m.

In some embodiments, the SFN value includes any one of:
a minimum SFN value;
a maximum SFN value;
the minimum SFN value and the maximum SFN value;
a section number corresponding to the SFN value; or
a parameter pair (i, j) corresponding to the SFN value, in which i denotes a number of sections after equally segmenting all the SFN values into sections in a specified order, j denotes a section number of a section containing a current SFN value among the i sections, and j is an integer less than or equal to i.

In some embodiments, the applicable condition being satisfied includes:
a SN value corresponding to a PDCP data packet received by the terminal device satisfying the applicable condition;
   or,
a SFN value corresponding to the PDCP data packet received by the terminal device satisfying the applicable condition.

In some embodiments, the indication information further includes multicast broadcast service (MBS) service information, and the received PDCP data packet is a first PDCP data packet received by the terminal device from a MBS radio bearer (MRB) corresponding to the MBS service information.

In some embodiments, the SFN value corresponding to the received PDCP data packet includes any one of:
a SFN value corresponding to a time location of a last physical data channel on which the PCDP data packet is successfully received;
a SFN value corresponding to a time location of a first physical data channel on which the PCDP data packet is successfully received; and
the SFN value corresponding to successfully receiving the PDCP data packet.

In some embodiments, the applicable condition is the SN value, and the processing module is configured to:
in response to the applicable condition not being satisfied and a difference between the SN value corresponding to the PDCP data packet received by the terminal device and the SN value of the applicable condition being s, generate updated HFN information by updating the HFN information based on the difference s; and
determine the HFN value of the PDCP entity based on the updated HFN information.

In some embodiments, the applicable condition is the SFN value, and the processing module is configured to:
in response to the applicable condition not being satisfied and a difference between the SFN value corresponding to the PDCP data packet received by the terminal device and the SFN value of the applicable condition being k, generate updated HFN information by updating the HFN information based on the difference k; and
determine the HFN value of the PDCP entity based on the updated HFN information.

In some embodiments, the indication information further includes an update mode of the HFN information, and the processing module is configured to:
in response to the applicable condition not being satisfied, generate updated HFN information by updating the HFN information based on the update mode; and
determine the HFN value of the PDCP entity based on the updated HFN information.

In some embodiments, the update mode includes an update step size and an update direction.

In some embodiments, the transceiver module is configured to:
receive, based on a system message, the indication information sent by the network device;
   or,
receive, based on a MBS control channel message, the indication information sent by the network device;
   or,
receive, based on a dedicated configuration message of the terminal device, the indication information sent by the network device.

In some embodiments, the indication information further includes the MBS service information, and the processing module is configured to:
determine the HFN value of the PDCP entity corresponding to the MBS service information based on the HFN information.

In some embodiments, the MBS service information includes at least one of a MBS service identifier (ID), a MBS bearer ID, or protocol entity configuration information of a MBS bearer.

In some embodiments, the processing module is configured to: decrypt or verify an integrity of received data corresponding to the MBS service information based on the HFN information.

In some embodiments, the processing module is configured to:
in response to the terminal device being a device newly accessing a MBS service, determine the HFN value of the PDCP entity based on the HFN information.

In a fourth aspect, embodiments of the disclosure provide a communication device, configured on a network device side. The communication device includes: a transceiver module configured to send indication information to a terminal device, in which the indication information includes HFN information.

In some embodiments, the HFN information includes any one of the HFN value or a count value (COUNT).

In some embodiments, the transceiver module is configured to send an applicable condition of the HFN information to the terminal device.

In some embodiments, the applicable condition of the HFN information includes any one of a sequence number (SN) value or a system frame number (SFN) value.

In some embodiments, the SN value includes any one of:
a minimum SN value;
a maximum SN value;
the minimum SN value and the maximum SN value;
a section number corresponding to the SN value; or
a parameter pair (m, n) corresponding to the SN value, in which m denotes a number of sections after equally segmenting all the SN values into sections in a specified order, n denotes a section number of a section containing a current SN value among the m sections, and n is an integer less than or equal to m.

In some embodiments, the SFN value includes any one of:
a minimum SFN value;
a maximum SFN value;
the minimum SFN value and the maximum SFN value;
a section number corresponding to the SFN value; or
a parameter pair (i, j) corresponding to the SFN value, in which i denotes a number of sections after equally segmenting all the SFN values into sections in a specified order, j denotes a section number of a section containing a current SFN value among the i sections, and j is an integer less than or equal to i.

In some embodiments, the indication information further includes multicast broadcast service (MBS) service information.

In some embodiments, the MBS service information includes at least one of a MBS service identifier (ID), a MBS bearer ID, or protocol entity configuration information of a MBS bearer.

In some embodiments, the indication information further includes an update mode of the HFN information.

In some embodiments, the update mode includes an update step size and an update direction.

In some embodiments, the transceiver module is configured to:
send the indication information to the terminal device based on a system message;
   or,
send the indication information to the terminal device based on a MBS control channel message;
   or,
send the indication information to the terminal device based on a dedicated configuration message of the terminal device.

In some embodiments, the transceiver module is configured to:
in response to an information change in the system message other than the HFN information, send first change indication information to the terminal device;
   or,
in response to an information change in the MBS control channel message other than the HFN information, send second change indication information to the terminal device.

In a fifth aspect, embodiments of the disclosure provide a communicating device. The communicating device includes: a processor. When the processor calls computer programs stored in a memory, the method described in the first aspect above is implemented.

In a sixth aspect, embodiments of the disclosure provide a communicating device. The communicating device includes: a processor. When the processor calls computer programs stored in a memory, the method described in the second aspect above is implemented.

In a seventh aspect, embodiments of the disclosure provide a communicating device. The communicating device includes: a processor and a memory having computer programs stored thereon. When the processor executes the computer programs stored in the memory, the communicating device is caused to perform the method described in the first aspect above.

In an eighth aspect, embodiments of the disclosure provide a communicating device. The communicating device includes: a processor and a memory having computer programs stored thereon. When the processor executes the computer programs stored in the memory, the communicating device is caused to perform the method described in the second aspect above.

In a ninth aspect, embodiments of the disclosure provide a communicating device. The communicating device includes: a processor and an interface circuit. The interface circuit is configured to receive code instructions and transmit the code instructions to the processor, and the processor is configured to run the code instructions to cause the communicating device to implement the method described in the first aspect above.

In a tenth aspect, embodiments of the disclosure provide a communicating device. The communicating device includes: a processor and an interface circuit. The interface circuit is configured to receive code instructions and transmit the code instructions to the processor, and the processor is configured to run the code instructions to cause the communicating device to implement the method described in the second aspect above.

In an eleventh aspect, embodiments of the disclosure provide a communication system. The system includes: the communication device of the third aspect or the communication device of the fourth aspect, or the communicating device of the fifth aspect or the communication device of the sixth aspect, or the communicating device of the seventh aspect or the communication device of the eighth aspect, or the communicating device of the ninth aspect or the communication device of the tenth aspect

In a twelfth aspect, embodiments of the disclosure provide a computer-readable storage medium, having instructions used by the above terminal device stored thereon. When the instructions are executed, the terminal device is caused to implement the method of the first aspect.

In a thirteenth aspect, embodiments of the disclosure provide a computer-readable storage medium, having instructions used by the above network device stored thereon. When the instructions are executed, the network device is caused to implement the method of the second aspect.

In a fourteenth aspect, embodiments of the disclosure provide a computer program product including computer programs. When the computer programs are run by a computer, the computer is caused to implement the method of the first aspect.

In a fifteenth aspect, embodiments of the disclosure provide a computer program product including computer programs. When the computer programs are run by a computer, the computer is caused to implement the method of the second aspect.

In a sixteenth aspect, embodiments of the disclosure provide a chip system. The chip system includes at least one processor and an interface for supporting the terminal device in realizing the functions involved in the first aspect, e.g., determining or processing at least one of data or information involved in the method described above. In a possible design, the chip system further includes a memory. The memory is configured to store necessary computer programs and data of the terminal device. The chip system may consist of chips or may include a chip and other discrete devices.

In a seventeenth aspect, embodiments of the disclosure provide a chip system. The chip system includes at least one processor and an interface for supporting the network device in realizing the functions involved in the second aspect, e.g., determining or processing at least one of data or information involved in the method described above. In a possible design, the chip system further includes a memory. The memory is configured to store necessary computer programs and data of the network device. The chip system may consist of chips or may include a chip and other discrete devices.

In an eighteenth aspect, embodiments of the disclosure provide a computer program. When the computer program is running on a computer, the computer is caused to implement the method of the first aspect.

In a nineteenth aspect, embodiments of the disclosure provide a computer program. When the computer program is running on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic diagram illustrating a communication system according to embodiments of the disclosure.
FIG. 2 is a flowchart illustrating a method for determining a hyper frame number (HFN) of a packet data convergence protocol (PDCP) entity according to embodiments of the disclosure.
FIG. 3 is a flowchart illustrating a method for determining a HFN of a PDCP entity according to embodiments of the disclosure.
FIG. 4 is a flowchart illustrating a method for determining a HFN of a PDCP entity according to embodiments of the disclosure.
FIG. 5 is a flowchart illustrating a method for determining a HFN of a PDCP entity according to embodiments of the disclosure.
FIG. 6 is a flowchart illustrating a method for determining a HFN of a PDCP entity according to embodiments of the disclosure.
FIG. 7 is a flowchart illustrating a method for determining a HFN of a PDCP entity according to embodiments of the disclosure.
FIG. 8 is a flowchart illustrating a method for determining a HFN of a PDCP entity according to embodiments of the disclosure.
FIG. 9 is a flowchart illustrating a method for determining a HFN of a PDCP entity according to embodiments of the disclosure.
FIG. 10 is a schematic diagram illustrating a communication device according to embodiments of the disclosure.
FIG. 11 is a schematic diagram illustrating a communication device according to embodiments of the disclosure.
FIG. 12 is a schematic diagram illustrating a communication device according to embodiments of the disclosure.
FIG. 13 is a schematic diagram illustrating a chip according to embodiments of the disclosure.

### DETAILED DESCRIPTION

For ease of understanding, the terms involved in this disclosure are introduced at first.

### 1. Multimedia broadcast and multicast service (MBMS) or multicast broadcast service (MBS)

The MBS is a practical technology to improve spectrum usage efficiency and is widely used in communication systems. In a 5G new radio access technology (RAT) system, MBS services can be sent through a physical downlink shared channel (PDSCH) scheduled by a physical downlink control channel (PDCCH).

### 2. Packet data convergence protocol (PDCP)

PDCP is a wireless transmission protocol stack that can process radio resource control (RRC) messages and internet protocol (IP) packets. The PDCP can perform IP header compression and decompression, transmit user data and maintain the sequence number (SN) of the radio bearer, and can also provide signaling transmission services, realize signaling encryption and consistency protection, and signaling decryption and consistency verification in the opposite direction.

### 3. Encryption and integrity protection

The communication system can encrypt data and protect its integrity. Usually, the integrity protection function is realized by adding a 32-bit message authentication code for integrity (MAC-I) at the end of the PDCP data packet.

Usually, a PDCP receiving entity needs to know a COUNT value of a PDCP to decrypt its encrypted data or to verify an integrity of the data.

The COUNT value of the PDCP can be composed of both a HFN and a SN of the PDCP together, occupying totally 32 bits. Usually, a header of the PDCP data packet carries the SN of the PDCP.

### 4. System frame number (SFN)

In a communication system, time domain resources can be numbered consecutively in SFNs with a granularity of 10 milliseconds (ms). One SFN can contain 10 subframes, and each subframe is 1ms.The SFN can be indicated by master information block (MIB) information of a synchronous signal block (SSB).

In order to well understand the method for determining a HFN of a PDCP entity according to the embodiments of the disclosure, a communication system to which the embodiments of the disclosure are applicable is first described below.

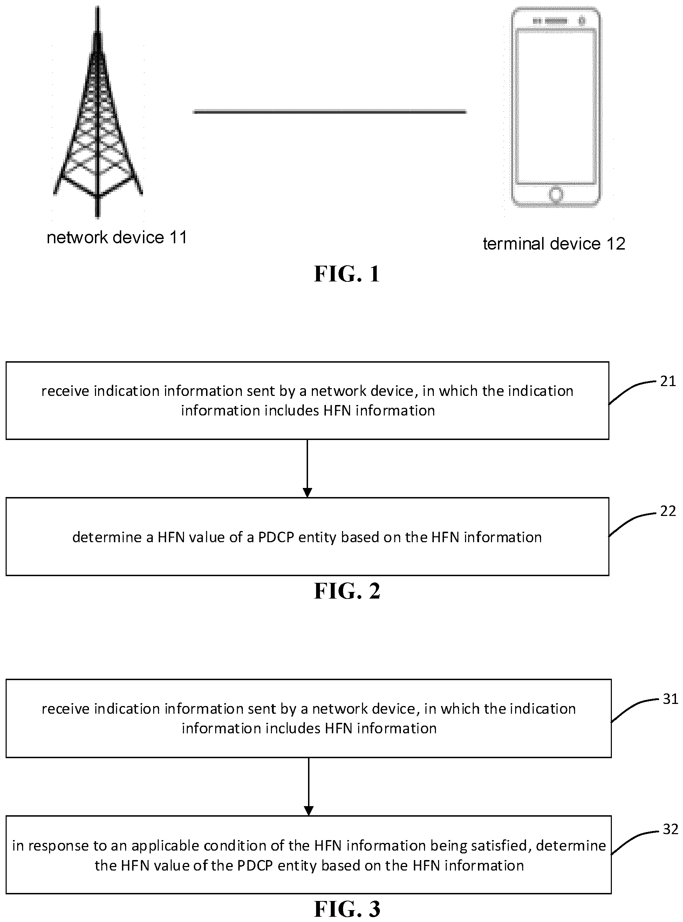

As illustrated in FIG. 1, FIG. 1 is a schematic diagram illustrating a communication system according to embodiments of the disclosure. The communication system may include, but is not limited to, a network device and a terminal device. The number and the form of devices illustrated in FIG. 1 are only for examples and do not constitute a limitation on the embodiments of the disclosure, and two or more network devices and two or more terminal devices may be included in practical applications. The communication system illustrated in FIG. 1 includes, for example, one network device 11 and one terminal device 12.

It is noteworthy that the technical solutions of the embodiments of the disclosure can be applied to various communication systems, such as, a long term evolution (LTE) system, a 5th generation (5G) mobile communication system, a 5G new radio (NR) system, or other future new mobile communication systems.

The network device 11 in embodiments of the disclosure is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to embodiments of the disclosure may be composed of a central unit (CU) and a distributed unit (DU). The CU may also be called control unit. The use of CU-DU structure allows to divide a protocol layer of the network device, such as a base station, such that some of the protocol layer functions are placed in the CU for centralized control, and some or all of the remaining protocol layer functions are distributed in the DU, and the DU is centrally controlled by the CU.

The terminal device 12 in the embodiments of the disclosure is an entity on a user side for receiving or transmitting signals, such as a cellular phone. The terminal device may also be referred to as terminal, user equipment (UE), mobile station (MS), mobile terminal (MT), and the like. The terminal device can be a car with communication functions, a smart car, a mobile phone, a wearable devices, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in the embodiments of the disclosure.

It is understandable that the communication system described in the embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

A method for determining a HFN of a PDCP entity and an apparatus for determining a HFN of a PDCP entity will be introduced in detail below with reference to the accompanying drawings.

As illustrated in FIG. 2, FIG. 2 is a flowchart illustrating a method for determining a HFN of a PDCP entity according to embodiments of the disclosure. The method is performed by a terminal device. As illustrated in FIG. 2, the method may include, but is not limited to, the following.

At step 21, indication information sent by a network device is received. The indication information includes HFN information.

In some examples, the HFN information includes one or more of a HFN value or a COUNT.

It can be understandable that the HFN value in the indication information is a HFN value corresponding to a PDCP data packet currently used by the network device, or the COUNT value in the indication information is a COUNT value corresponding to a PDCP data packet currently sent by the network device.

In the disclosure, in order to avoid that a terminal device newly added to receive the PDCP data sent by the network device is unable to use a correct COUNT value to decrypt or verify integrity of the PDCP data packet, the network device may, in accordance with a certain rule, send an indication message to the terminal device, to indicate the HFN value or COUNT corresponding to the current PDCP data to the terminal device.

At step 22, a HFN value of the PDCP entity is determined based on the HFN information.

For example, the indication message received by the terminal device indicates that the HFN value is 1, and then the terminal device can determine that the HFN value of the PDCP entity is 1.

As another example, the indication message received by the terminal device indicates that the COUNT value is 0, then the terminal device can determine that the HFN value of the PDCP entity is 0.

As still another example, the indication message received by the terminal device indicates that the COUNT value is 8, and if the terminal device knows that the SN value ranges from 0 to 7 and the SN value in the received PDCP data packet is 7, then the terminal device can determine that the HFN value of the PDCP entity is 1.

It is noteworthy that the above examples are merely illustrative and cannot be taken as a limitation of the content of the indication information, the HFN value, the COUNT value, and the like in the embodiments of the disclosure.

In some examples, for a newly accessed terminal device, when the indication information received by the terminal device indicates the COUNT value, the terminal device may directly use the COUNT value to decrypt or verify the integrity of the data in the received data packet, calculate the HFN value currently adopted by the network device based on the COUNT value and the SN in the received data packet, and then determine the HFN value of the PDCP entity based on the calculated HFN value.

In some examples, for a newly accessed terminal device, when the indication information received by the terminal device indicates the HFN value, the terminal device may use the HFN value to determine a corresponding COUNT value, and then decrypt or verify the integrity of the data in the received data packet.

In the embodiment of the disclosure, the terminal device may first receive the indication information sent by the network device, and then determine the HFN value of the PDCP entity based on the HFN information included in the indication information. Therefore, the terminal device may have the same understanding of the HFN value as the network device, to avoid the data decryption failure or data integrity verification failure and to improve the reliability of data transmission.

As illustrated in FIG. 3, FIG. 3 is a flowchart illustrating a method for determining a HFN of a PDCP entity according to embodiments of the disclosure. The method is performed by a terminal device. As illustrated in FIG. 3, the method may include, but is not limited to, the following.

At step 31, indication information sent by a network device is received. The indication information includes HFN information.

In some examples, the HFN information includes one or more of a HFN value or a COUNT value.

At step 32, in response to an applicable condition of the HFN information being satisfied, the HFN value of the PDCP entity is determined based on the HFN information.

In some examples, the applicable condition of the HFN information includes one or more of a SN value or a SFN value.

In some examples, the applicable condition may be indicated by the network device or may be determined by the terminal device according to a protocol, which is not limited in the disclosure.

The network device can indicate the applicable condition of the HFN information while indicating the HFN information to the terminal device. Or, the network device can also indicate the applicable condition of the HFN information separately to the terminal device through other indication information, which is not limited by the disclosure.

In some examples, the SN value can be a minimum SN value.

Correspondingly, the terminal device may determine the HFN value of the PDCP entity based on the HFN information indicated by the network device when the SN value corresponding to the PDCP data packet received by the terminal device is greater than or equal to the minimum SN value.

For example, if the indication information received by the terminal device is that the HFN value is 1 and the terminal device determines, based on a protocol or an indication from the network device, that the applicable condition of the HFN information is that the minimum SN value is 5, when the terminal device determines that the SN value corresponding to the received PDCP data packet is 7, since 7 is greater than the minimum SN value of 5 in the applicable condition, that is, the applicable condition of the HFN information is satisfied, the terminal device determines that the HFN value of the PDCP entity is 1 based on the HFN value indicated by the network device.

It is noteworthy that the above examples are merely illustrative and cannot be taken as a limitation of the indication information, the HFN value, the minimum SN value, and the like in the embodiments of the disclosure.

In some examples, the SN value can be a maximum SN value.

Correspondingly, the terminal device may determine the HFN value of the PDCP entity based on the HFN information indicated by the network device when the SN value corresponding to the PDCP data packet received by the terminal device is less than or equal to the maximum value.

For example, if the indication information received by the terminal device is that the HFN value is 1 and the terminal device determines, based on a protocol or an indication from the network device, that the applicable condition of the HFN information is that the maximum SN value is 5, when the terminal device determines that the SN value corresponding to the received PDCP data packet is 1, since 1 is less than the maximum SN value of 5 in the applicable condition, that is, the applicable condition of the HFN information is satisfied, the terminal device determines that the HFN value of the PDCP entity is 1 based on the HFN value indicated by the network device.

It is noteworthy that the above examples are merely illustrative and cannot be taken as a limitation of the indication information, the HFN value, the maximum SN value, and the like in the embodiments of the disclosure.

In some examples, the SN value can be both the minimum SN value and the maximum SN value.

Correspondingly, the terminal device may determine the HFN value of the PDCP entity based on the HFN information indicated by the network device when the SN value corresponding to the PDCP data packet received by the terminal device is greater than or equal to the minimum SN value and less than or equal to the maximum SN value.

For example, if the indication information received by the terminal device indicates that the HFN value is 1 and the terminal device determines, based on a protocol or an indication from the network device, that the applicable condition of the HFN information is that the minimum SN value is 1 and the maximum SN value is 5, when the terminal device determines that the SN value corresponding to the received PDCP data packet is 2, since 2 is greater than the minimum SN value of 1 and is less than the maximum SN value of 5 in the applicable condition, that is, the applicable condition of the HFN information is satisfied, the terminal device determines that the HFN value of the PDCP entity is 1 based on the HFN value indicated by the network device.

It is noteworthy that the above examples are merely illustrative and cannot be taken as a limitation of the indication information, the HFN value, the minimum SN value, the maximum SN value, and the like in the embodiments of the disclosure.

In some examples, the SN value can be a section number corresponding to the SN value. Correspondingly, the terminal device may determine the HFN value of the PDCP entity based on the HFN information indicated by the network device when the section number corresponding to the SN value of the received PDCP data packet is the same as the section number corresponding to the SN value in the applicable condition.

It is understandable that the segmentation method of the SN values can be agreed upon by the protocol.

For example, if the indication information received by the terminal device is that the HFN value is 1 and the terminal device determines, based on a protocol or an indication from the network device, that the applicable condition of the HFN information is that the section number corresponding to the SN value is 1, when the terminal device determines that the section number corresponding to the SN value of the received PDCP data packet is 1, since 1 is identical to the section number corresponding to the SN value in the applicable condition, that is, the applicable condition of the HFN information is satisfied, the terminal device determines that the HFN value of the PDCP entity is 1 based on the HFN value indicated by the network device.

It is noteworthy that the above examples are merely illustrative and cannot be taken as a limitation of the indication information, the HFN value, the section number corresponding to the SN value, and the like in the embodiments of the disclosure.

In some examples,, the SN value can be a parameter pair (m, n) corresponding to the SN value, in which m denotes a number of sections after equally segmenting all the SN values into sections in a specified order, n denotes a section number of a section containing a current SN value among the m sections, and n is an integer less than or equal to m.

Correspondingly, when the SN value corresponding to the received PDCP data packet corresponds to a section having the section number of n among the m sections, the terminal device may determine the HFN value of the PDCP entity based on the HFN information indicated by the network device.

For example, if the indication information received by the terminal device indicates that the HFN value is 1 and the terminal device determines, based on a protocol or an indication from the network device, that the applicable condition of the HFN information is that the parameter pair corresponding to the SN value is (2, 1), when the terminal device determines that the section number corresponding to a section containing the SN value corresponding to the received PDCP data packet among the 2 sections is 1, that is, the applicable condition of the HFN information is satisfied, the terminal device determines that the HFN value of the PDCP entity is 1 based on the HFN value indicated by the network device.

It is noteworthy that the above examples are merely illustrative and cannot be taken as a limitation of the indication information, the HFN value, m, n, and the like in the embodiments of the disclosure.

In some examples, the SFN value cam be a minimum SFN value.

Correspondingly, the terminal device may determine the HFN value of the PDCP entity based on the HFN information indicated by the network device when the SFN value corresponding to the received PDCP data packet is greater than or equal to the minimum SFN value.

For example, if the indication information received by the terminal device is that the HFN value is 1 and the terminal device determines, based on a protocol or an indication from the network device, that the applicable condition of the HFN information is that the minimum SFN value is 5, when the terminal device determines that the SFN value corresponding to the received PDCP data packet is 7, since 7 is greater than the minimum SFN value of 5 in the applicable condition, that is, the applicable condition of the HFN information is satisfied, the terminal device determines that the HFN value of the PDCP entity is 1 based on the HFN value indicated by the network device.

It is noteworthy that the above examples are merely illustrative and cannot be taken as a limitation of the indication information, the HFN value, the minimum SFN value, and the like in the embodiments of the disclosure.

In some examples, the SFN value can be a maximum SFN value.

Correspondingly, the terminal device may determine the HFN value of the PDCP entity based on the HFN information indicated by the network device when the SFN value corresponding to the received PDCP data packet is less than or equal to the maximum SFN value.

For example, if the indication information received by the terminal device is that the HFN value is 1 and the terminal device determines, based on a protocol or an indication from the network device, that the applicable condition of the HFN information is that the maximum SFN value is 5, when the terminal device determines that the SFN value corresponding to the received PDCP data packet is 1, since 1 is less than the maximum SFN value of 5 in the applicable condition, that is, the applicable condition of the HFN information is satisfied, the terminal device determines that the HFN value of the PDCP entity is 1 based on the HFN value indicated by the network device.

It is noteworthy that the above examples are merely illustrative and cannot be taken as a limitation of the indication information, the HFN value, the maximum SFN value, and the like in the embodiments of the disclosure.

In some examples, the SFN value can be both the minimum SFN value and the maximum SFN value.

Correspondingly, the terminal device may determine the HFN value of the PDCP entity based on the HFN information indicated by the network device when the SFN value corresponding to the received PDCP data packet is greater than or equal to the minimum SFN value and less than or equal to the maximum SFN value.

For example, if the indication information received by the terminal device is that the HFN value is 1 and the terminal device determines, based on a protocol or an indication from the network device, that the applicable condition of the HFN information is that the minimum SFN value is 1 and the maximum SFN value is 5, when the terminal device determines that the SFN value corresponding to the received PDCP data packet is 2, since 2 is greater than the minimum SFN value of 1 and is less than the maximum SFN value of 5 in the applicable condition, that is, the applicable condition of the HFN information is satisfied, the terminal device determines that the HFN value of the PDCP entity is 1 based on the HFN value indicated by the network device.

It is noteworthy that the above examples are merely illustrative and cannot be taken as a limitation of the indication information, the HFN value, the minimum SFN value, the maximum SFN value, and the like in the embodiments of the disclosure.

In some examples, the SFN value can be a section number corresponding to the SFN value. Correspondingly, the terminal device may determine the HFN value of the PDCP entity based on the HFN information indicated by the network device when the section number corresponding to the SFN value of the received PDCP data packet is the same as the section number corresponding to the SFN value in the applicable condition.

It is understandable that the method for segmenting the SFN values can be agreed upon by the protocol.

For example, if the indication information received by the terminal device is that the HFN value is 1 and the terminal device determines, based on a protocol or an indication from the network device, that the applicable condition of the HFN information is that the section number corresponding to the SFN value is 1, when the terminal device determines that the section number corresponding to the SFN value of the received PDCP data packet is 1, since 1 is identical to the section number corresponding to the SFN value in the applicable condition, that is, the applicable condition of the HFN information is satisfied, the terminal device determines that the HFN value of the PDCP entity is 1 based on the HFN value indicated by the network device.

It is noteworthy that the above examples are merely illustrative and cannot be taken as a limitation of the indication information, the HFN value, the section number corresponding to the SFN value, and the like in the embodiments of the disclosure.

In some examples, the SFN value can be a parameter pair (i, j) corresponding to the SFN value, in which i denotes a number of sections after equally segmenting all the SFN values into sections in a specified order, j denotes a section number of a section containing a current SFN value among the i sections, and j is an integer less than or equal to i.

Correspondingly, when a section containing the SFN value corresponding to the received PDCP data packet among the i sections has a section number of j, the terminal device may determine the HFN value of the PDCP entity based on the HFN information indicated by the network device.

For example, if the indication information received by the terminal device is that the HFN value is 1 and the terminal device determines, based on a protocol or an indication from the network device, that the applicable condition of the HFN information is that the parameter pair corresponding to the SFN value is (2, 1), when the terminal device determines that the SFN value corresponding to the received PDCP data packet is within a section having the section number of 1 among the 2 sections, that is, the applicable condition of the HFN information is satisfied, the terminal device determines that the HFN value of the PDCP entity is 1 based on the HFN value indicated by the network device.

It is noteworthy that the above examples are merely illustrative and cannot be taken as a limitation of the indication information, the HFN value, i, j, and the like in the embodiments of the disclosure.

For example, for a newly accessed terminal device, the terminal device may determine a corresponding HFN value based on the determined applicable condition of the HFN information and the received indication information, and use the HFN value to determine a corresponding COUNT value for decrypting or verifying the integrity of the data of the received data packet.

In the embodiments of the disclosure, the terminal device may first receive the HFN information and the applicable condition of the HFN information sent by the network device, and then determine the HFN value of the PDCP entity based on the HFN information when the applicable condition of the HFN information is satisfied. Therefore, the terminal device can have the same understanding of the HFN value as the network device, to avoid the data decryption failure or data integrity verification failure and to improve the reliability of data transmission.

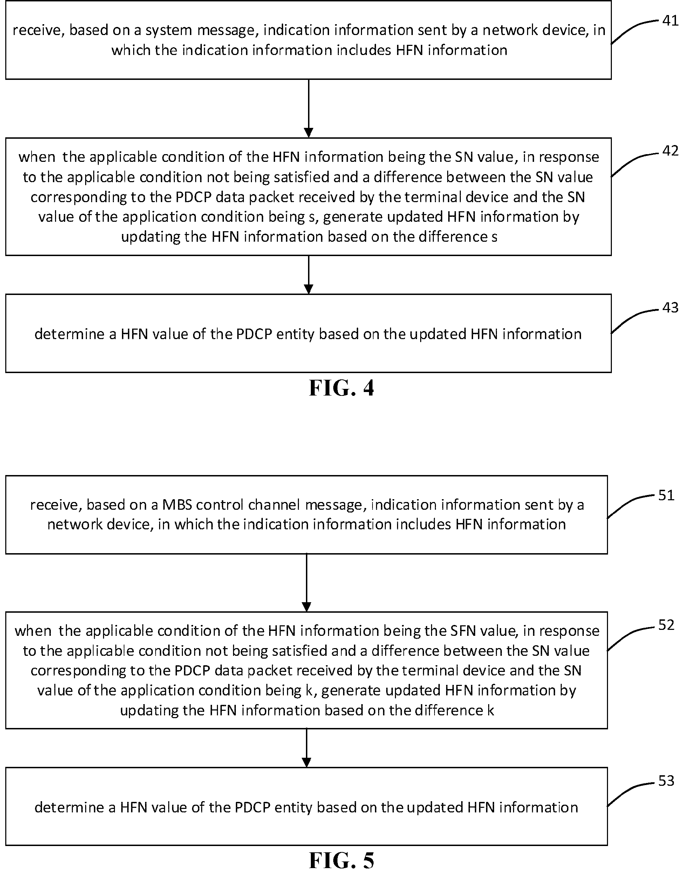

As illustrated in FIG. 4, FIG. 4 is a flowchart illustrating a method for determining a HFN of a PDCP entity according to embodiments of the disclosure. The method is performed by a terminal device. As illustrated in FIG. 4, the method may include, but is not limited to, the following.

At step 41, the indication information sent by the network device is received based on a system message. The indication information includes HFN information.

For example, the terminal device may receive the indication information sent by the network device based on a system information block (SIB), such as SIB1.

It is understandable that, in the disclosure, the network device may extend the SIB 1 message, to carry the indication information in the SIB1. For example, a specified bit may be added to the SIB1 and values of the specified bit are configured to indicate the HFN value and/or the COUNT value. Therefore, upon receiving the SIB 1 message, the terminal device can determine the HFN value and/or the COUNT value in the indication information based on the value of the specified bit, which is not limited in the disclosure.

In some examples, the HFN information includes one or more of a HFN value or a COUNT value.

In some examples, the network device may also send the indication information to the terminal device via a MBS control channel message, so that the terminal device may receive the indication information sent by the network device based on the MBS control channel message.

It is understandable that, in the disclosure, the network device may extend the MBS control channel message, to carry the indication information in the MBS control channel message. For example, a specified bit may be added to the MBS control channel message, and values of the specified bit are configured to indicate the HFN value and/or the COUNT value. Therefore, upon receiving the MBS control channel message, the terminal device can determine the HFN value and/or the COUNT value in the indication information based on the value of the specified bit, which is not limited in the disclosure.

In some examples, the network device may also send the indication information to the terminal device via a dedicated configuration message of the terminal device, so that the terminal device may receive the indication information sent by the network device based on the dedicated configuration message of the terminal device.

It is understandable that, in the disclosure, the network device may configure the dedicated configuration message of the terminal device, to carry the indication information in the dedicated configuration message of the terminal device. For example, a specified bit may be added to the dedicated configuration message of the terminal device and values of the specified bit are configured to indicate the HFN value and/or the COUNT value. Therefore, upon receiving the dedicated configuration message of the terminal device, the terminal device can determine the HFN value and/or the COUNT value in the indication information based on the value of the specific bit, which is not limited in the disclosure.

At step 42, when the applicable condition of the HFN information is the SN value, in response to the applicable condition not being satisfied and a difference between the SN value corresponding to the PDCP data packet received by the terminal device and the SN value of the applicable condition being s, updated HFN information is generated by updating the HFN information based on the difference s.

In some examples, the applicable condition of the HFN information may be indicated by the network device or may be determined by the terminal device in accordance with a protocol, which is not limited in the disclosure.

In some examples, the SN value can be a minimum SN value.

Correspondingly, the terminal device may generate the updated HFN information by updating the HFN information based on the difference s when the SN value corresponding to the received PDCP data packet is less than the minimum SN value.

For example, if the indication information received by the terminal device is that the HFN value is 1 and the terminal device determines, based on a protocol or an indication from the network device, that the applicable condition of the HFN information is that the minimum SN value is 3, when the terminal device determines that the SN value corresponding to the received PDCP data packet is 2, since 2 is less than the minimum SN value of 3 in the applicable condition, that is, the applicable condition of the HFN information is not satisfied and the difference s between the SN value of 2 corresponding to the PDCP data packet received by the terminal device and the SN value of 3 of the applicable condition is -1, the terminal device generates the updated HFN information that the HFN value is 0 by updating the HFN information based on the difference s.

It is noteworthy that the above examples are merely illustrative and cannot be taken as a limitation of the indication information, the HFN value, the minimum SN value, and the like in the embodiments of the disclosure.

For example, the SN value can be a maximum SN value.

Correspondingly, the terminal device may generate the updated HFN information by updating the HFN information based on the difference s when the SN value corresponding to the received PDCP data packet is greater than the maximum SN value.

For example, if the indication information received by the terminal device is that the HFN value is 1 and the terminal device determines, based on a protocol or an indication from the network device, that the applicable condition of the HFN information is that the maximum SN value is 3, when the terminal device determines that the SN value corresponding to the received PDCP data packet is 4, since 4 is greater than the maximum SN value of 3 in the applicable condition, that is, the applicable condition of the HFN information is not satisfied, and the difference s between the SN value of 4 corresponding to the PDCP data packet received by the terminal device and the SN value of 3 in the applicable condition is +1, the terminal device generates the updated HFN information that the HFN value is 2 by updating the HFN information based on the difference s.

It is noteworthy that the above examples are merely illustrative and cannot be taken as a limitation of the indication information, the HFN value, the maximum SN value, and the like in the embodiments of the disclosure.

For example, the SN value can be both the minimum SN value and the maximum SN value.

Correspondingly, the terminal device may generate the updated HFN information by updating the HFN information based on the difference s when the SN value corresponding to the received PDCP data packet is less than the minimum SN value or greater than the maximum SN value.

For example, if the indication information received by the terminal device is that the HFN value is 1 and the terminal device determines, based on a protocol or an indication from the network device, that the applicable condition of the HFN information is that the minimum SN value is 2 and the maximum SN value is 5, when the terminal device determines that the SN value corresponding to the received PDCP data packet is 6, since 6 is greater than the maximum SN value of 5 in the applicable condition, that is, the applicable condition of the HFN information is not satisfied, and the difference s between the SN value of 6 corresponding to the PDCP data packet received by the terminal device and the SN value of 5 in the applicable condition is +1, the terminal device generates the updated HFN information that the HFN value is 2 by updating the HFN information based on the difference s.

It is noteworthy that the above examples are merely illustrative and cannot be taken as a limitation of the indication information, the HFN value, the minimum SN value, the maximum SN value, and the like in the embodiments of the disclosure.

For example, the SN value can be a section number corresponding to the SN value. Correspondingly, the terminal device may generate the updated HFN information by updating the HFN information based on the difference s when the section number corresponding to the SN value of the received PDCP data packet is different from the section number corresponding to the SN value in the applicable condition.

It is understandable that the method for segmenting the SN values can be agreed upon by the protocol.

For example, if the indication information received by the terminal device is that the HFN value is 1 and the terminal device determines, based on a protocol or an indication from the network device, that the applicable condition of the HFN information is that the section number corresponding to the SN value is 1, when the terminal device determines that the section number corresponding to the SN value of the received PDCP data packet is 2, that is, the applicable condition of the HFN information is not satisfied, the difference s between the section number of 2 corresponding to the SN value of the received PDCP data packet and the section number of 1 specified in the applicable condition is +1, the terminal device generates the updated HFN information that the HFN value is 2 by updating the HFN information based on the difference s.

It is noteworthy that the above examples are merely illustrative and cannot be taken as a limitation of the indication information, the HFN value, the section number corresponding to the SN value, and the like in the embodiments of the disclosure.

For example, the SN value can be a parameter pair (m, n) corresponding to the SN value, in which m denotes a number of sections after equally segmenting all the SN values into sections in a specified order, n denotes a section number of a section containing a current SN value among the m sections, and n is an integer less than or equal to m.

Correspondingly, when the section containing the SN value corresponding to the received PDCP data packet among the m sections has a section number other than n, the terminal device may generate the updated HFN information by updating the HFN information based on the difference s.

For example, if the indication information received by the terminal device is that the HFN value is 1 and the terminal device determines, based on a protocol or an indication from the network device, that the applicable condition of the HFN information is that the parameter pair corresponding to the SN value is (2, 1), when the terminal device determines that a section containing the SN value corresponding to the received PDCP data packet among the 2 sections has a section number of 2, i.e., the applicable condition of the HFN information is not satisfied, the difference s between the section number of 2 corresponding to the SN value of the received PDCP data packet and the section number of 1 specified in the applicable condition is +1, the terminal device generates the updated HFN information that the HFN value is 2 by updating the HFN information based on the difference s.

It is noteworthy that the above examples are merely illustrative and cannot be taken as a limitation of the indication information, the HFN value, m, n, and the like in the embodiments of the disclosure.

At step 43, a HFN value of the PDCP entity is determined based on the updated HFN information.

For example, the terminal device may determine the updated HFN value as the HFN value of the PDCP entity.

For example, for a newly accessed terminal device, the HFN value of the PDCP entity can be determined based on the determined applicable condition of the HFN information and the received indication information, and the corresponding COUNT value can be determined using the HFN value, to decrypt or verify the integrity of the data in the received data packet.

In the embodiments of the disclosure, the terminal device may first receive the indication information sent by the network device. Based on the HFN information included in the indication information and the determined SN value, when the determined SN value is not satisfied and the difference between the SN value corresponding to the PDCP data packet received by the terminal device and the determined SN value is s, the terminal device updates the HFN information based on the difference s, and determines the HFN value of the PDCP entity based on the updated HFN information. Therefore, the terminal device has the same understanding of the HFN value as the network device, to avoid the data decryption failure or data integrity verification failure and to improve the reliability of data transmission.

As illustrated in FIG. 5, FIG. 5 is a flowchart illustrating a method for determining a HFN of a PDCP entity according to embodiments of the disclosure. The method is performed by a terminal device. As illustrated in FIG. 5, the method may include, but is not limited to, the following.

At step 51, the indication information sent by the network device is received based on a MBS control channel message. The indication information includes HFN information.

For example, the HFN information includes one or more of a HFN value or a COUNT value.

It is noteworthy that the content and specific implementation form of the indication information received by the terminal device based on the MBS control channel message can be referred to other embodiments of the disclosure and will not be repeated herein.

At step 52, when the applicable condition is the SFN value, in response to the applicable condition not being satisfied and a difference between the SFN value corresponding to the PDCP data packet received by the terminal device and the SFN value of the applicable condition being k, updated HFN information is generated by updating the HFN information based on the difference k.

For example, the applicable condition of the HFN information may be indicated by the network device or may be determined by the terminal device in accordance with a protocol, which is not limited in the disclosure.

For example, the SFN value corresponding to the PDCP data packet received by the terminal device includes any one of: a SFN value corresponding to a time location of a last physical data channel on which the PCDP data packet is successfully received; a SFN value corresponding to a time location of a first physical data channel on which the PCDP data packet is successfully received; or the SFN value corresponding to successfully receiving the PDCP data packet.

For example, the SFN value corresponding to the PDCP data packet received by the terminal device is the SFN value corresponding to the time location of the last physical data channel on which the PCDP data packet is successfully received. In receiving the PDCP data packet, the terminal device needs to successfully receive the physical downlink shared channel (PDSCH) data at a moment of t1 and the PDSCH data at a moment of t2 (in which t1 is prior to t2), and then the terminal device can determine the SFN value corresponding to the moment of t2 as the SFN value corresponding to the PDCP data packet received by the terminal device, which is not limited in the disclosure.

Or, the SFN value corresponding to the PDCP data packet received by the terminal device is the SFN value corresponding to the time location of the first physical data channel on which the PCDP data packet is successfully received. In receiving the PDCP data packet, the terminal device needs to successfully receive the PDSCH data at the moment of t1 and the PDSCH data at the moment of t2 (in which t1 is prior to t2), and then the terminal device can determine the SFN value corresponding to the moment of t1 as the SFN value corresponding to the PDCP data packet received by the terminal device, which is not limited in the disclosure.

Or, the SFN value corresponding to the PDCP data packet received by the terminal device is the SFN value corresponding to successfully receiving the PDCP data packet. For example, in receiving the PDCP data packet, the moment at which the data packet is successfully received is t3, the terminal device can determine the SFN value corresponding to the moment of t3 as the SFN value corresponding to the PDCP data packet received by the terminal device, which is not limited in the disclosure.

For example, the SFN value can be a minimum SFN value.

Correspondingly, the terminal device may generate the updated HFN information by updating the HFN information based on the difference k when the SFN value corresponding to the received PDCP data packet is less than the minimum SFN value.

For example, if the indication information received by the terminal device is that the HFN value is 1 and the terminal device determines, based on a protocol or an indication from the network device, that the applicable condition of the HFN information is that the minimum SFN value is 3, when the terminal device determines that the SFN value corresponding to the received PDCP data packet is 2, since 2 is less than the minimum SFN value of 3 in the applicable condition, that is, the applicable condition of the HFN information is not satisfied, and the difference k between the SFN value of 2 corresponding to the PDCP data packet received by the terminal device and the SFN value of 3 in the applicable condition is -1, the terminal device generates the updated HFN information that the HFN value is 0 by updating the HFN information based on the difference k.

It is noteworthy that the above examples are merely illustrative and cannot be taken as a limitation of the indication information, the HFN value, the minimum SFN value, and the like in the embodiments of the disclosure.

For example, the SFN value can be a maximum SFN value.

Correspondingly, the terminal device may generate the updated HFN information by updating the HFN information based on the difference k when the SFN value corresponding to the received PDCP data packet is greater than the maximum SFN value.

For example, if the indication information received by the terminal device is that the HFN value is 1 and the terminal device determines, based on a protocol or an indication from the network device, that the applicable condition of the HFN information is that the maximum SFN value is 3, when the terminal device determines that the SFN value corresponding to the received PDCP data packet is 4, since 4 is greater than the maximum SFN value of 3 in the applicable condition, that is, the applicable condition of the HFN information is not satisfied, the difference k between the SFN value of 4 corresponding to the PDCP data packet received by the terminal device and the SFN value of 3 in the applicable condition is +1, the terminal device generates the updated HFN information that the HFN value is 2 by updating the HFN information based on the difference k.

It is noteworthy that the above examples are merely illustrative and cannot be taken as a limitation of the indication information, the HFN value, the maximum SFN value, and the like in the embodiments of the disclosure.

For example, the SFN value can be both the minimum SFN value and the maximum SFN value.

Correspondingly, the terminal device may generate the updated HFN information by updating the HFN information based on the difference k when the SFN value corresponding to the received PDCP data packet is less than the minimum SFN value or greater than the maximum SFN value.

For example, if the indication information received by the terminal device is that the HFN value is 1 and the terminal device determines, based on a protocol or an indication from the network device, that the applicable condition of the HFN information is that the minimum SFN value is 2 and the maximum SFN value is 5, when the terminal device determines that the SFN value corresponding to the received PDCP data packet is 6, since 6 is greater than the maximum SFN value of 5 in the applicable condition, that is, the applicable condition of the HFN information is not satisfied, the difference k between the SFN value of 6 corresponding to the PDCP data packet received by the terminal device and the maximum SFN value of 5 in the applicable condition is +1, the terminal device generates the updated HFN information that the HFN value is 2 by updating the HFN information based on the difference k.

It is noteworthy that the above examples are merely illustrative and cannot be taken as a limitation of the indication information, the HFN value, the minimum SFN value, the maximum SFN value, and the like in the embodiments of the disclosure.

For example, the SFN value can be a section number corresponding to the SFN value. Correspondingly, the terminal device may generate the updated HFN information by updating the HFN information based on the difference k when the section number corresponding to the SFN value of the received PDCP data packet is different the section number corresponding to the SFN value in the applicable condition.

It is understandable that the method for segmenting the SFN values can be agreed upon by the protocol.

For example, if the indication information received by the terminal device is that the HFN value is 1 and the terminal determines, based on a protocol or an indication from the network device, that the applicable condition of the HFN information is that the section number corresponding to the SFN value is 1, when the terminal device determines that the section number corresponding to the SFN value of the received PDCP data packet is 2, i.e., the applicable condition of the HFN information is not satisfied, and the difference k between the section number of 2 corresponding to the SFN value of the received PDCP data packet and the section number of 1 specified in the applicable condition is +1, the terminal device generates the updated HFN information that the HFN value is 2 by updating the HFN information based on the difference k.

It is noteworthy that the above examples are merely illustrative and cannot be taken as a limitation of the indication information, the HFN value, the section number corresponding to the SFN value, and the like in the embodiments of the disclosure.

For example, the SFN value can be a parameter pair (i, j) corresponding to the SFN value, in which i denotes a number of sections after equally segmenting all the SFN values into sections in a specified order, j denotes a section number of a section containing a current SFN value among the i sections, and j is an integer less than or equal to i.

Correspondingly, when the section containing the SFN value corresponding to the received PDCP data packet among the i sections has a section number other than j, the terminal device may generate the updated HFN information by updating the HFN information based on the difference k.

For example, if the indication information received by the terminal device is that the HFN value is 1 and the terminal device determines, based on a protocol or an indication from the network device, that the applicable condition of the HFN information is that the parameter pair corresponding to the SFN value is (2, 1), when the terminal device determines that the section containing the SFN value corresponding to the received PDCP data packet among the 2 sections has a section number of 2, that is, the applicable condition of the HFN information is not satisfied, and the difference k between the section number of 2 corresponding to the SFN value of the received PDCP data packet and the section number of 1 specified in the applicable condition is +1, the terminal device generates the updated HFN information that the HFN value is 2 by updating the HFN information based on the difference k.

It is noteworthy that the above examples are merely illustrative and cannot be taken as a limitation of the indication information, the HFN value, i, j, and the like in the embodiments of the disclosure.

At step 53, a HFN value of the PDCP entity is determined based on the updated HFN information.

For example, the terminal device may determine the updated HFN value as the HFN value of the PDCP entity.

For example, for a newly accessed terminal device, the HFN value of the PDCP entity can be determined based on the determined applicable condition of the HFN information and the received indication information, and the corresponding COUNT value can be determined using the HFN value, to decrypt or verify the integrity of the data in the received data packet.

In the embodiments of the disclosure, the terminal device may first receive the indication information sent by the network device. Based on the HFN information included in the indication information and the determined SFN value, when the SFN value is not satisfied and the difference between the SFN value corresponding to the PDCP data packet received by the terminal device and the SFN value is k, the terminal device updates the HFN information based on the difference k, and determines the HFN value of the PDCP entity based on the updated HFN information. Therefore, the terminal device can have the same understanding of the HFN value as the network device, to avoid the data decryption failure or data integrity verification failure and to improve the reliability of data transmission.

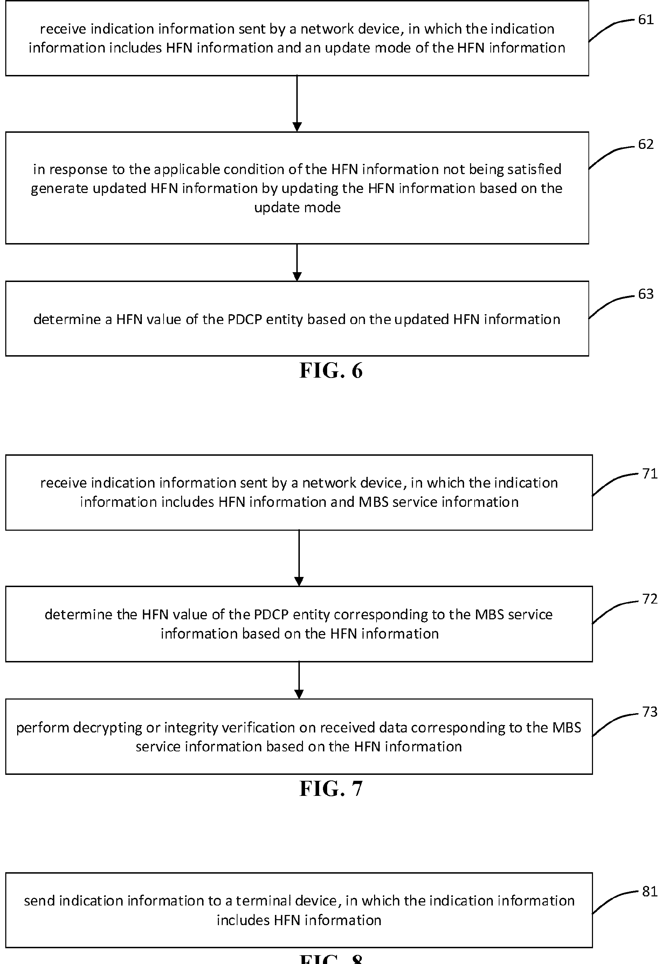

As illustrated in FIG. 6, FIG. 6 is a flowchart illustrating a method for determining a HFN of a PDCP entity according to embodiments of the disclosure. The method is performed by a terminal device. As illustrated in FIG. 6, the method may include, but is not limited to, the following.

At step 61, indication information sent by a network device is received. The indication information includes HFN information and an update mode of the HFN information.

In the embodiments of the disclosure, when indicating the HFN information to the terminal device, the network device may determine the update mode of the HFN information based on the current network state, such as a sending speed of the PDCP data packet, and send the update mode to the terminal device, to avoid a situation in which the HFN information received by the terminal device is inaccurate due to poor network state.

For example, the HFN information includes one or more of a HFN value or a COUNT value.

For example, the update mode includes an update step size and an update direction.

The update step size may be any value set by the network device, such as, 1, 2, and 3, which is not limited in the disclosure.

In addition, the update direction may be any direction set by the network device, such as a direction indicated by "+", a direction indicated by "-", and the like, which is not limited in the disclosure. Therefore, the update mode of the HFN information may be "HFN value indicated by the indication information + 1", "HFN value indicated by the indication information - 2", "COUNT value indicated by the indication information - 1" and the like, which is not limited in the disclosure.

At step 62, in response to the applicable condition not being satisfied, updated HFN information is generated by updating the HFN information based on the update mode.

For example, the applicable condition of the HFN information may be indicated by the network device or may be determined by the terminal device according to a protocol, which is not limited by the disclosure.

For example, when the PDCP data packet is sent too fast, the PDCP data packet received by the terminal device may not satisfy the applicable condition of the HFN information. At this time, the update mode of the HFN information indicated by the network device may be "HFN value indicated by the indication information + 1". When the PDCP data packet is sent too slowly, the PDCP data packet received by the terminal device may not satisfy the applicable condition of the HFN information. At this time, the update mode of the HFN information indicated by the network device may be "HFN value indicated by the indication information - 1" or "HFN value indicated by the indication information - 2", which is not limited in the disclosure.

For example, the applicable condition of the HFN information is the minimum SN value. Correspondingly, the terminal device may update the HFN information based on the update mode to generate the updated HFN information when the SN value corresponding to the received PDCP data packet is less than the minimum SN value.

For example, if the indication information received by the terminal device is that the HFN value is 1 and the HFN value in the indication information - 1, and the terminal device determines, according to a protocol or an indication from the network device, that the applicable condition of the HFN information is that the minimum SN value is 3, when the terminal device determines that the SN value corresponding to the received PDCP data packet is 2, since 2 is less than the minimum SN value of 3 in the applicable condition, that is, the applicable condition of the HFN information is not satisfied, the terminal device can update the HFN information, and the updated HFN value is 0.

Or, the applicable condition of the HFN information is the maximum SFN value. Correspondingly, the terminal device may update the HFN information based on the update mode to generate the updated HFN information when the SFN value corresponding to the received PDCP data packet is greater than this maximum SFN value.

For example, the terminal device receives the indication information that the HFN value is 1 and the HFN value in the indication information + 1, and the terminal device determines, according to a protocol or an indication from the network device that the applicable condition of the HFN information is that the maximum SFN value is 3, when the terminal device determines that the SFN value corresponding to the received PDCP data packet is 4, since 4 is greater than the maximum SFN value of 3 in the applicable condition, that is, the applicable condition of the HFN information is not satisfied, the terminal device can update the HFN information and the updated HFN value is 2.

It is noteworthy that the above examples are merely illustrative and cannot be taken as a limitation of the indication information, the HFN value, the minimum SFN value, the maximum SFN value, and the like in the embodiments of the disclosure.

It is noteworthy that for other cases in which the applicable condition of the HFN information is not satisfied, the updated content and specific implementation form of the HFN information based on the update mode can be referred to the description of other embodiments of the disclosure, and will not be repeated herein.

At step 63, a HFN value of the PDCP entity is determined based on the updated HFN information.

For example, the terminal device may determine the updated HFN value as the HFN value of the PDCP entity.

For example, for a newly accessed terminal device, the HFN value of the PDCP entity can be determined based on the determined applicable condition of the HFN information and the received indication information, and the HFN can be used to determine the corresponding COUNT value, to decrypt or verify the integrity of the data in the received data packet.

In the embodiments of the disclosure, the terminal device may first receive the indication information sent by the network device. Based on the HFN information included in the indication information and the determined applicable condition of the HFN information, when the applicable condition of the HFN information is not satisfied, the terminal device updates the HFN information based on the update mode to generate the updated HFN information, and then determines the HFN value of the PDCP entity. Therefore, the terminal device may have the same understanding of the HFN value as the network device, to avoid the data decryption failure or data integrity verification failure and to improve the reliability of data transmission.

As illustrated in FIG. 7, FIG. 7 is a flowchart illustrating a method for determining a HFN of a PDCP entity according to embodiments of the disclosure. The method is performed by a terminal device. As illustrated in FIG. 7, the method may include, but is not limited to, the following.

At step 71, indication information sent by a network device is received. The indication information includes HFN information and MBS service information.

For example, the HFN information includes one or more of a HFN value or a COUNT value.

For example, the MBS service information includes at least one of a MBS service ID, a MBS bearer ID, or protocol entity configuration information of a MBS bearer.

The MBS service ID may include a temporary mobile group identity (TMGI), a MBS session ID, and a MBS quality of service (QoS) flow ID, which is not limited in this disclosure.

In addition, the format or presentation form of the MBS bearer ID may be agreed upon by the protocol or configured by the network device, such as MRB-1 or MRB-2, which is not limited in this disclosure.

For example, the protocol entity configuration information of the MBS bearer may be PDCP configuration information. The PDCP configuration information may include: a PDCP SN length, a packet header compression configuration, or a configuration as to whether or not integrity verification is required.

Or, the protocol entity configuration information of the MBS bearer may be a radio link control (RLC) configuration. The RLC configuration may include: a PDCP SN length, a RLC operating mode indication, or the like.

Or, the protocol entity configuration information of the MBS bearer may be a medium access control (MAC) configuration, which may include a logical channel ID and is not limited in the disclosure.

At step 72, the HFN value of the PDCP entity corresponding to the MBS service information is determined based on the HFN information.

For example, the indication information received by the terminal device indicates that, for a MRB-1, the HFN value is 1. Therefore, the terminal device may determine that the HFN value of the PDCP entity corresponding to the MRB-1 is 1, which is not limited in the disclosure.

For example, the terminal device may determine the HFN value of the PDCP entity corresponding to the MBS service information based on the HFN information when the SN value corresponding to the received PDCP data packet satisfies the applicable condition of the HFN information.

As an example, the SN value may be the minimum SN value. Correspondingly, the terminal device may determine the HFN value of the PDCP entity corresponding to the MBS service information based on the HFN information indicated by the network device when the SN value corresponding to the received PDCP data packet is greater than or equal to this minimum SN value.

For example, the PDCP data packet received by the terminal device may be a first PDCP data packet received by the terminal device from a MRB corresponding to the MBS service information.

For example, if the indication information received by the terminal device is that the HFN value is 1 and the radio bearer corresponding to the MBS service information is MRB-1, the terminal device determines, according to a protocol or an indication from the network device, that the applicable condition of the HFN information is that the minimum SN value is 5, and the PDCP data packet received by the terminal device may be the first PDCP data packet received by the terminal device from the MRB-1, when the terminal device determines that the SN value corresponding to the PDCP data packet is 7, since 7 is greater than the minimum SN value of 5 in the applicable condition, that is, the applicable condition of the HFN information is satisfied, the terminal device can determine that the HFN value of the PDCP entity corresponding to the MRB-1 is 1 based on the HFN value indicated by the network device.

It is noteworthy that the above examples are merely illustrative and cannot be taken as a limitation of the indication information, the HFN value, the minimum SN value, and the like in the embodiments of the disclosure.

For example, the terminal device may determine the HFN value of the PDCP entity corresponding to the MBS service information based on the HFN information when the SFN value corresponding to the received PDCP data packet satisfies the applicable condition of the HFN information.

For example, the SFN value can be the maximum SFN value. Correspondingly, the terminal device may determine the HFN value of the PDCP entity corresponding to the MBS service information based on the HFN information indicated by the network device when the SFN value corresponding to the received PDCP data packet is less than or equal to the maximum SFN value.

For example, if the indication information received by the terminal device is that the HFN value is 1 and the radio bearer corresponding to the MBS service information is MRB-1, and the terminal device determines, based on a protocol or an indication from the network device, that the applicable condition of the HFN information is that the maximum SFN value is 5, when the terminal device determines that the SFN value corresponding to the received PDCP data packet is 1, since 1 is less than the maximum SFN value of 5 in the applicable condition, that is, the applicable condition of the HFN information is satisfied, the terminal device determines that the HFN value of the PDCP entity corresponding to the MRB-1 is 1 based on the HFN value indicated by the network device.

It is noteworthy that the above examples are merely illustrative and cannot be taken as a limitation of the indication information, the HFN value, the maximum SFN value, and the like in the embodiments of the disclosure.

It is noteworthy that when the SN value or the SFN value satisfies other applicable conditions of the HFN information, the specific content and implementation mode of the HFN value of the PDCP entity corresponding to the MBS service information can be determined with reference to the description of other embodiments of the disclosure and will not be repeated herein.

For example, for a terminal device newly accessing the MBS service, the HFN value of the PDCP entity corresponding to the MBS service information may be determined based on the HFN information.

For example, if the indication information received by the terminal device newly accessing the MBS service is that the HFN value is 1 and the radio bearer corresponding to the MBS service is MRB-1, then the terminal device may determine the HFN value of the PDCP entity corresponding to the MRB-1, which is not limited in the disclosure.

At step 73, decrypting or integrity verification is performed on received data corresponding to the MBS service information based on the HFN information.

For example, after the terminal device determines that the HFN value of the PDCP entity corresponding to the MRB-1 is 1, the terminal device uses the HFN value to determine a corresponding COUNT value, and then decrypts or verifies the integrity of the received data corresponding to the MRB-1, which is not limited in the disclosure.

In the embodiments of the disclosure, the terminal device may first receive the indication information sent by the network device, determine the HFN value of the PDCP entity corresponding to the MBS service information based on the HFN information and the MBS service information included in the indication information, and decrypt or verify the integrity of the received data corresponding to the MBS service information. Therefore, the terminal device can have the same understanding of the HFN value as the network device, to avoid the data decryption failure or data integrity verification failure and to improve the reliability of data transmission.

As illustrated in FIG. 8, FIG. 8 is a flowchart illustrating a method for determining a HFN of a PDCP entity according to embodiments of the disclosure. The method is performed by a network device. As illustrated in FIG. 8, the method may include, but is not limited to, the following.

At step 81, indication information is sent to a terminal device. The indication information includes HFN information.

For example, the HFN information includes one or more of a HFN value and a COUNT value.

For example, the network device may send the indication information to the terminal device based on a system message. The indication information includes HFN information.

For example, the network device may extend the SIB 1 message, to carry the indication information in the SIB1. For example, a specified bit may be added to the SIB 1, and values of the specified value are configured to indicate the HFN value and/or the COUNT value, which is not limited in the disclosure.

For example, the network device may send the indication information to the terminal device based on a MBS control channel message.

It is understandable that, in the disclosure, the network device may extend the MBS control channel message, to carry the indication information in the MBS control channel message. For example, a specified bit may be added to the MBS control channel message, and values of the specified bit may be configured to indicate the HFN value and/or the COUNT value, which is not limited in the disclosure.

For example, the network device may send the indication information to the terminal device based on a dedicated configuration message of the terminal device.

It is understandable that, in the disclosure, the network device may extend the dedicated configuration message of the terminal device, to carry the indication information in the dedicated configuration message of the terminal device. For example, a specified bit may be added to the dedicated configuration message of the terminal device, and values of the specified bit can be configured to indicate the HFN value and/or the COUNT value, which is not limited in the disclosure.

In the embodiments of the disclosure, the network device may send the indication information to the terminal device, so that the terminal device may receive the HFN information. Therefore, the terminal device may maintain the same understanding of the HFN value as the network device, to avoid the data decryption failure or data integrity verification failure and to improve the reliability of data transmission.

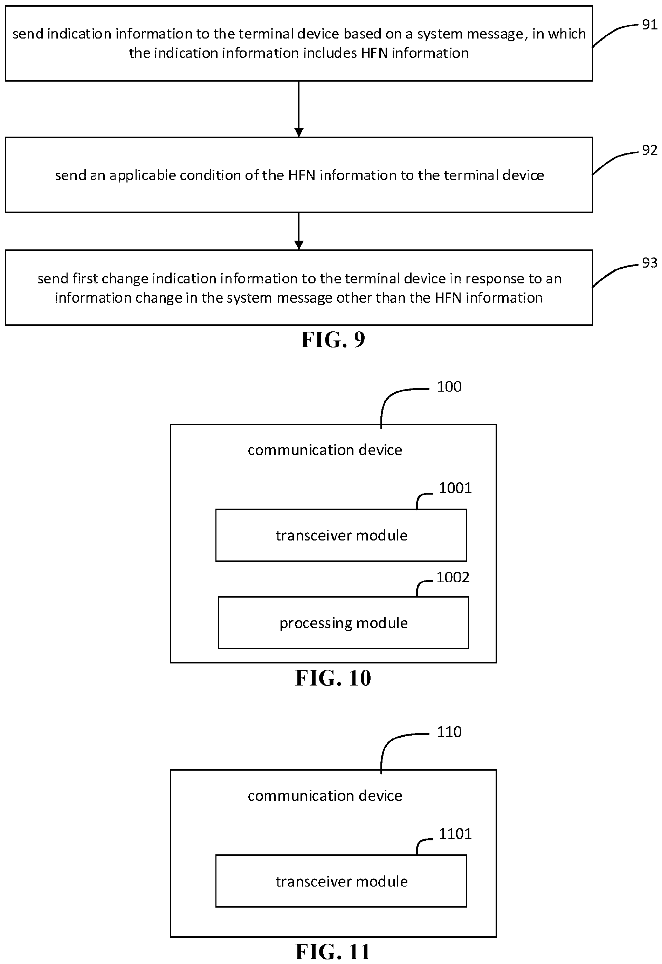

As illustrated in FIG. 9, FIG. 9 is a flowchart illustrating a method for determining a HFN of a PDCP entity according to embodiments of the disclosure. The method is performed by a network device. As illustrated in FIG. 9, the method may include, but is not limited to, the following.

At step 91, the indication information is sent to a terminal device based on a system message. The indication information includes HFN information.

For example, the network device may extend the SIB1 message, to carry the indication information in the SIB1. For example, a specified bit may be added to the SIB1 and values of the specified bit can be configured to indicate the HFN value and/or the COUNT value, which is not limited in the disclosure.

The HFN information includes one or more of a HFN value and a COUNT value.

At step 92, an applicable condition of the HFN information is sent to the terminal device.

For example, the applicable condition of the HFN information includes one or more of a SN value or a SFN value.

The SN value includes one or more of: a minimum SN value; a maximum SN value; both the minimum SN value and the maximum SN value; a section number corresponding to the SN value; or a parameter pair (m, n) corresponding to the SN value, in which m demotes a number of sections after equally segmenting all the SN values into sections in a specified order, n denotes a section number of a section containing a current SN value among the m sections, and n is an integer less than or equal to m.

For example, the SFN value includes one or more of: a minimum SFN value; a maximum SFN value; both the minimum SFN value and the maximum SFN value; a section number corresponding to the SFN value; or a parameter pair (i, j) corresponding to the SFN value, in which i denotes a number of sections after equally segmenting all the SFN values into sections in a specified order, j denotes a section number of a section containing a current SFN value among the i sections, and j is an integer less than or equal to i.

It is noteworthy that the operations performed by the terminal device based on the applicable condition of the HFN information and corresponding effects can be described with reference to the description of the terminal device side in other embodiments of the disclosure and will not be repeated herein.

For example, the indication information further includes MBS service information.

The MBS service information includes at least one of a MBS service ID, a MBS bearer ID, or protocol entity configuration information of a MBS bearer.

For example, the indication information further includes an update mode of the HFN information.

For example, the update mode includes an update step size and an update direction.

The update step size may be a value set by the network device according to the speed of sending the PDCP data packet, such as, 1, 2, and 3, which is not limited in the disclosure.

In addition, the update direction may be a direction set by the network device, such as a direction indicated by "+", a direction indicated by "-", or the like, which is not limited in the disclosure.

For example, when the PDCP data packet is sent too fast, it is possible that the PDCP data packet received by the terminal device does not satisfy the applicable condition of the HFN information. At this time, the update mode of the HFN information indicated by the network device may be "HFN value indicated by the indication information + 1". When the PDCP data packet is sent too slowly, it is possible that the PDCP data packet received by the terminal device does not satisfy the applicable condition of the HFN information. At this time, the update mode of the HFN information indicated by the network device may be "HFN value indicated by the indication information - 1" or "HFN value indicated by the indication information - 2", which is not limited in the disclosure.

It is noteworthy that operations performed by the terminal device based on different indication information and corresponding effects can be referred to the description of the terminal device side in other embodiments of the disclosure and will not be repeated herein.

At step 93, in response to any information change in the system message other than the HFN information, first change indication information is sent to the terminal device.

It is understandable that, in order to reduce data transmission, while the network device is sending the indication information to the terminal device via the system message, the network device may send the first change indication information to the terminal device in response to any information change in the system message other than the HFN information. Therefore, if the HFN value in the system message changes, the network device does not send the first change indication information to the terminal device, which reduces data transmission, so that the terminal device can have the same understanding of the HFN value as the network device, thereby ensuring the reliability of data transmission.

For example, in response to any information change in the MBS control channel message other than the HFN information, the network device sends second change indication information to the terminal device. Therefore, if the HFN value in the MBS control channel message changes, the network device does not send the second change indication information to the terminal device, which reduces data transmission, so that the terminal device can have the same understanding of the HFN value as the network device, thereby ensuring the reliability of data transmission.

In the embodiments of the disclosure, the network device may send the indication information to the terminal device based on the system message, so that the terminal device may receive the HFN information. The network device may also send the applicable condition of the HFN information to the terminal device, and send the first change indication information to the terminal device in response to any information change in the system message other than the HFN information. Therefore, the terminal device may maintain the same understanding of the HFN value as the network device, to avoid the data decryption failure or data integrity verification failure and to improve the reliability of data transmission.

In the above embodiments of the disclosure, the methods according to the embodiments of the disclosure are described from the perspectives of the network device and the terminal device, respectively. In order to realize each of the functions in the methods according to the above embodiments of the disclosure, the network device and the terminal device may include a hardware structure, a software module, and realize each of the above functions in the form of hardware structure, software module, or a combination of hardware structure and software module. A certain function of the above functions may be performed in the form of hardware structure, software module, or a combination of hardware structure and software module.

As illustrated in FIG. 10, FIG. 10 is a schematic diagram illustrating a communication device 100 according to embodiments of the disclosure. The communication device 100 illustrated in FIG. 10 may include a transceiver module 1001 and a processing module 1002.

The transceiver module 1001 may include a transmitting module and/or a receiving module. The transmitting module is configured to perform a transmitting function, and the receiving module is configured to perform a receiving function, so that the transceiver module 1001 can perform the transmitting function and/or the receiving function.

It is understandable that the communication device 100 may be a terminal device, a device in the terminal device, or a device capable of being used in combination with the terminal device.

The communication device 100, configured on a terminal device side, includes: a transceiver module 1001 and a processing module 1002.

The transceiver module 1001 is configured to receive indication information sent by a network device, in which the indication information includes HFN information.

The processing module 1002 is configured to determine a HFN value of a PDCP entity based on the HFN information.

For example, the HFN information includes one or more of a HFN value or a COUNT value.

For example, the processing module 1002 is configured to: in response to an applicable condition of the HFN information being satisfied, determine the HFN value of the PDCP entity based on the HFN information.

For example, the transceiver module 1001 is configured to receive the applicable condition of the HFN information sent by the network device;
Or,
the processing module 1002 is configured to determine the applicable condition of the HFN information based on a protocol.

For example, the applicable condition of the HFN information includes one or more of a SN value or a SFN value.

For example, the SN value includes one or more of:
a minimum SN value;
a maximum SN value;
the minimum SN value and the maximum SN value;
a section number corresponding to the SN value; or
a parameter pair (m, n) corresponding to the SN value, in which m denotes a number of sections after equally segmenting all the SN values into sections in a specified order, n denotes a section number of a section containing a current SN value among the m sections, and n is an integer less than or equal to m.

For example, the SFN value includes one or more of:
a minimum SFN value;
a maximum SFN value;
the minimum SFN value and the maximum SFN value;
a section number corresponding to the SFN value; or
a parameter pair (i, j) corresponding to the SFN value, in which i denotes a number of sections after equally segmenting all the SFN values into sections in a specified order, j denotes a section number of a section of a current SFN value among the i sections, and j is an integer less than or equal to i.

For example, the applicable condition being satisfied includes:
a SN value corresponding to a PDCP data packet received by the terminal device satisfying the applicable condition;
   or,
a SFN value corresponding to the PDCP data packet received by the terminal device satisfying the applicable condition.

For example, the indication information further includes MBS service information, and the received PDCP data packet is a first PDCP data packet received by the terminal device from a MRB corresponding to the MBS service information.

For example, the SFN value corresponding to the received PDCP data packet includes one or more of:
a SFN value corresponding to a time location of a last physical data channel on which the PCDP data packet is successfully received;
a SFN value corresponding to a time location of a first physical data channel on which the PCDP data packet is successfully received; and
the SFN value corresponding to the PDCP data packet that is successfully received.

For example, the applicable condition is the SN value, and the processing module 1002 is configured to: in response to the applicable condition not being satisfied and a difference between the SN value corresponding to the PDCP data packet received by the terminal device and the SN value in the applicable condition being s, generate updated HFN information by updating the HFN information based on the difference s; and determine the HFN value of the PDCP entity based on the updated HFN information.

For example, the applicable condition is the SFN value, and the processing module 1002 is configured to: in response to the applicable condition not being satisfied and a difference between the SFN value corresponding to the PDCP data packet received by the terminal device and the SFN value in the applicable condition being k, generate updated HFN information by updating the HFN information based on the difference k; and determine the HFN value of the PDCP entity based on the updated HFN information.

For example, the indication information further includes an update mode of the HFN information, and the processing module 1002 is configured to: in response to the applicable condition not being satisfied, generate updated HFN information by updating the HFN information based on the update mode; and determine the HFN value of the PDCP entity based on the updated HFN information.

For example, the update mode includes an update step size and an update direction.

For example, the transceiver module 1001 is configured to: receive, based on a system message, the indication information sent by the network device; or, receive, based on a MBS control channel message, the indication information sent by the network device; or, receive, based on a dedicated configuration message of the terminal device, the indication information sent by the network device.

For example, the indication information further includes the MBS service information, and the processing module 1002 is configured to: determine the HFN value of the PDCP entity corresponding to the MBS service information based on the HFN information.

For example, the MBS service information includes at least one of a MBS service ID, a MBS bearer ID, or protocol entity configuration information of a MBS bearer.

For example, the processing module 1002 is configured to: decrypt or verify an integrity of received data corresponding to the MBS service information based on the HFN information.

For example, the processing module 1002 is configured to: in response to the terminal device being a device newly accessing a MBS service, determine the HFN value of the PDCP entity based on the HFN information.

With the communication device according to the disclosure, the terminal device may first receive the indication information sent by the network device, and determine the HFN value of the PDCP entity based on the HFN information included in the indication information. Therefore, the terminal device can have the same understanding of the HFN value as the network device, to avoid the data decryption failure or data integrity verification failure and to improve the reliability of data transmission.

As illustrated in FIG. 11, FIG. 11 is a schematic diagram illustrating a communication device 110 according to embodiments of the disclosure. The communication device 110 illustrated in FIG. 11 may include a transceiver module 1101.

The transceiver module 1101 may include a transmitting module and/or a receiving module. The transmitting module is configured to perform a transmitting function, and the receiving module is configured to perform a receiving function, so that the transceiver module 1101 can perform the transmitting function and/or the receiving function.

It is understandable that the communication device 110 may be a network device, a device in the network device, or a device capable of being used in combination with the network device.

The communication device 110, configured on a network device side, includes: the transceiver module 1101.

The transceiver module 1101 is configured to send indication information to a terminal device, in which the indication information includes HFN information.

For example, the HFN information includes one or more of the HFN value or a COUNT.

For example, the transceiver module is configured to send an applicable condition of the HFN information to the terminal device.

For example, the applicable condition of the HFN information includes one or more of a SN value or a SFN value.

For example, the SN value includes one or more of:
a minimum SN value;
a maximum SN value;
the minimum SN value and the maximum SN value;
a section number corresponding to the SN value; or
a parameter pair (m, n) corresponding to the SN value, in which m denotes a number of sections after equally segmenting all the SN values into sections in a specified order, n denotes a section number of a section containing a current SN value among the m sections, and n is an integer less than or equal to m.

For example, the SFN value includes one or more of:
a minimum SFN value;
a maximum SFN value;
the minimum SFN value and the maximum SFN value;
a section number corresponding to the SFN value; or
a parameter pair (i, j) corresponding to the SFN value, in which i denotes a number of sections after equally segmenting all the SFN values into sections in a specified order, j denotes a section number of a section containing a current SFN value among the i sections, and j is an integer less than or equal to i.

For example, the indication information further includes MBS service information.

For example, the MBS service information includes at least one or more of a MBS service ID, a MBS bearer ID, or protocol entity configuration information of a MBS bearer.

For example, the indication information further includes an update mode of the HFN information.

For example, the update mode includes an update step size and an update direction.

For example, the second transceiver module 1101 is configured to: send the indication information to the terminal device based on a system message; or, send the indication information to the terminal device based on a MBS control channel message; or, send the indication information to the terminal device based on a dedicated configuration message of the terminal device.

For example, the transceiver module 1101 is configured to: in response to any information change in the system message other than the HFN information, send first change indication information to the terminal device; or, in response to any information change in the MBS control channel message other than the HFN information, send second change indication information to the terminal device.

With the communication device according to the disclosure, the network device may send the indication information to the terminal device, so that the terminal device can receive the HFN information. Therefore, the terminal device can have the same understanding of the HFN value as the network device, to avoid the data decryption failure or data integrity verification failure and to improve the reliability of data transmission.

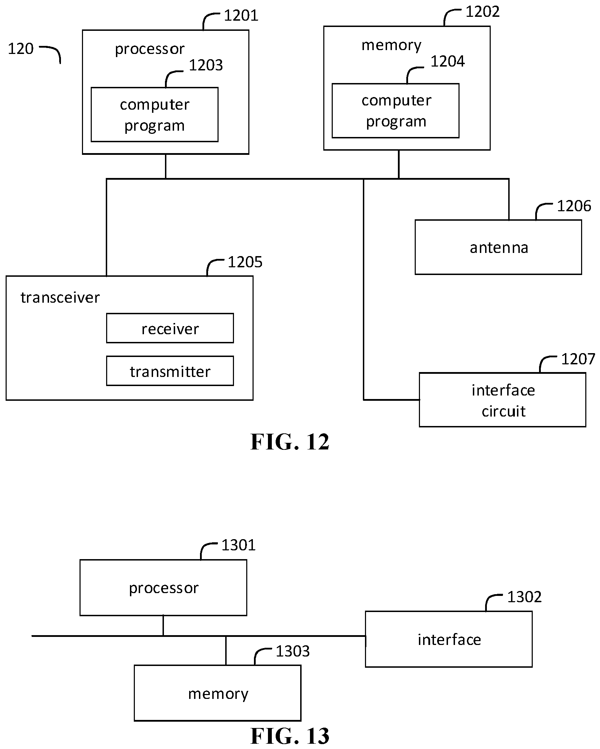

As illustrated in FIG. 12, FIG. 12 is a schematic diagram illustrating a communication device 120 according to embodiments of the disclosure. The communication device 120 may be a network device, a terminal device, or a chip, a chip system or a processor that supports the network device to realize the above-described methods, or a chip, a chip system or a processor that supports the terminal device to realize the above-described methods. The device may be used to realize the methods described in the above method embodiments with reference to the descriptions of the above-described method embodiments.

The communication device 120 may include one or more processors 1201. The processor 1201 may be a general purpose processor or a dedicated processor, such as, a baseband processor or a central processor. The baseband processor is used for processing communication protocols and communication data. The central processor is used for controlling the communication device (e.g., base station, baseband chip, terminal device, terminal device chip, DU, or CU), executing computer programs, and processing data of the computer programs.

For example, the communication device 120 may include one or more memories 1202 on which computer programs 1204 may be stored. The processor 1201 executes the computer programs 1204 to cause the communication device 120 to perform the methods described in the above method embodiments. In one embodiment, data may also be stored in the memory 1202. The communication device 120 and the memory 1202 may be provided separately or may be integrated together.

For example, the communication device 120 may also include a transceiver 1205 and an antenna 1206. The transceiver 1205 may be referred to as transceiver unit, transceiver machine, or transceiver circuit, for realizing the transceiver function. The transceiver 1205 may include a receiver and a transmitter. The receiver may be referred to as receiver machine or receiving circuit, for realizing the receiving function. The transmitter may be referred to as transmitter machine or transmitting circuit, for realizing the transmitting function.

For example, the communication device 120 may also include one or more interface circuits 1207. The interface circuits 1207 are used to receive code instructions and transmit them to the processor 1201. The processor 1201 runs the code instructions to cause the communication device 120 to perform the method described in the method embodiments.

The communication device 120 is a terminal device. The processor 1201 is configured to perform step 22 in FIG. 2, step 32 in FIG. 3, step 42 in FIG. 4, step 43 in FIG. 4, step 52 in FIG. 5, step 53 in FIG. 5, step 62 in FIG. 6, step 63 in FIG. 6, step 72 in FIG. 7, or step 73 in FIG. 7. The transceiver 1205 is used to perform step 21 in FIG. 2, step 31 in FIG. 3, step 41 in FIG. 4, step 51 in FIG. 5, step 61 in FIG. 6, or step 71 in FIG. 7.

The communication device 120 is a network device. The transceiver 1205 is used to perform step 81 in FIG. 8, step 91 in FIG. 9, step 92 in FIG. 9, or step 93 in FIG. 9.

In an implementation, the processor 1201 may include a transceiver for implementing the receiving and transmitting functions. The transceiver may be, for example, a transceiver circuit, an interface, or an interface circuit. The transceiver circuit, interface, or interface circuitry for implementing the receiving and transmitting functions may be separated or may be integrated together. The transceiver circuit, interface, or interface circuit described above may be used for code/data reading and writing, or may be used for signal transmission or delivery.

In an implementation, the processor 1201 may store a computer program 1203, which runs on the processor 1201 and may cause the communication device 120 to perform the methods described in the method embodiments above. The computer program 1203 may be solidified in the processor 1201, in which case the processor 1201 may be implemented by hardware.

In an implementation, the communication device 120 may include circuits. The circuits may implement the sending, receiving or communicating function in the preceding method embodiments. The processors and transceivers described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers can also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal device, but the scope of the communication device described in the disclosure is not limited thereto, and the structure of the communication device may not be limited by FIG. 12. The communication device may be a stand-alone device or may be part of a larger device. For example the described communication device may be:
(1) a stand-alone IC, chip, chip system or subsystem;
(2) a collection of ICs including one or more ICs, in one embodiment, the collection of ICs may also include storage components for storing data and computer programs;
(3) an ASIC, such as a modem;
(4) modules that can be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others.

The case where the communication device may be a chip or a chip system is described with reference to the schematic structure of the chip shown in FIG. 13. The chip shown in FIG. 13 includes a processor 1301 and an interface 1302. There may be one or more processors 1301, and there may be multiple interfaces 1302.

In cases where the chip is used to implement the function of the terminal device in the embodiment of the disclosure,
the interface 1302 is used for performing step 21 in FIG. 2, step 31 in FIG. 3, step 41 in FIG. 4, step 51 in FIG. 5, step 61 in FIG. 6, or step 71 of FIG. 7.

In cases where the chip is used to implement the function of the network device in the embodiment of the disclosure, the interface 1302 is used for performing step 81 in FIG. 8, step 91 in FIG. 9, step 92 in FIG. 9, or step 93 of FIG. 9.

For example, the chip further includes a memory 1303 used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the disclosure also provide a communication system. The communication system includes a communication device as a terminal device in the aforementioned embodiment of FIG. 10 and a communication device as a network device in the embodiment of FIG. 11. Or, it includes a communication device as a terminal device and a communication device as a network device in the aforementioned embodiment of FIG. 12.

The disclosure also provides a computer-readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In the embodiments of the disclosure, for technical features, "first", "second", and "third", and "A", "B", "C" and "D" are used to distinguish different technical features, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameters, it is not necessarily required that all the correspondences illustrated in the tables must be configured. For example, the above tables may be adjusted appropriately, such as splitting, merging, and the like. The names of the parameters shown in the headings of the above tables may be other names that are understood by the communication device, and the values or representations of the parameters may be other values or expressions that are understood by the communication device. Each of the above tables may also be implemented with other data structures, such as, arrays, queues, containers, stacks, linear tables, pointers, chained lists, trees, graphs, structures, classes, heaps, and hash tables.

The term "predefine" in this disclosure may be understood as define, predefine, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

## Claims

1. A method for determining a hyper frame number (HFN) of a packet data convergence protocol (PDCP) entity, performed by a terminal device, comprising:
receiving indication information sent by a network device, wherein the indication information comprises HFN information; and
determining a HFN value of the PDCP entity based on the HFN information.

2. The method of claim 1, wherein the HFN information comprises any one of the HFN value or a count value (COUNT).

3. The method of claim 1, wherein determining the HFN value of the PDCP entity based on the HFN information comprises:
in response to an applicable condition of the HFN information being satisfied, determining the HFN value of the PDCP entity based on the HFN information.

4. The method of claim 3, further comprising:
receiving the applicable condition of the HFN information sent by the network device;
or,
determining the applicable condition of the HFN information based on a protocol.

5. The method of claim 4, wherein the applicable condition of the HFN information comprises any one of a sequence number (SN) value or a system frame number (SFN) value.

6. The method of claim 5, wherein the SN value comprises any one of:
a minimum SN value;
a maximum SN value;
the minimum SN value and the maximum SN value;
a section number corresponding to the SN value; or
a parameter pair (m, n) corresponding to the SN value, wherein m denotes a number of sections after equally segmenting all the SN values into sections in a specified order, n denotes a section number of a section containing a current SN value among the m sections, and n is an integer less than or equal to m.

7. The method of claim 5, wherein the SFN value comprises any one of:
a minimum SFN value;
a maximum SFN value;
the minimum SFN value and the maximum SFN value;
a section number corresponding to the SFN value; or
a parameter pair (i, j) corresponding to the SFN value, wherein i denotes a number of sections after equally segmenting all the SFN values into sections in a specified order, j denotes a section number of a section containing a current SFN value among the i sections, and j is an integer less than or equal to i.

8. The method of any one of claims 5 to 7, wherein the applicable condition being satisfied comprises:
a SN value corresponding to a PDCP data packet received by the terminal device satisfying the applicable condition;
or,
a SFN value corresponding to the PDCP data packet received by the terminal device satisfying the applicable condition.

9. The method of claim 8, wherein the indication information further comprises multicast broadcast service (MBS) service information, and the received PDCP data packet is a first PDCP data packet received by the terminal device from a MBS radio bearer (MRB) corresponding to the MBS service information.

10. The method of claim 8, wherein the SFN value corresponding to the received PDCP data packet comprises any one of:
a SFN value corresponding to a time location of a last physical data channel on which the PCDP data packet is successfully received;
a SFN value corresponding to a time location of a first physical data channel on which the PCDP data packet is successfully received; or
the SFN value corresponding to successfully receiving the PDCP data packet.

11. The method of any one of claims 4 to 10, wherein the applicable condition is the SN value, and determining the HFN value of the PDCP entity based on the HFN information comprises:
in response to the applicable condition not being satisfied and a difference between the SN value corresponding to the PDCP data packet received by the terminal device and the SN value of the applicable condition being s, generating updated HFN information by updating the HFN information based on the difference s; and
determining the HFN value of the PDCP entity based on the updated HFN information.

12. The method of any one of claims 4 to 10, wherein the applicable condition is the SFN value, and determining the HFN value of the PDCP entity based on the HFN information comprises:
in response to the applicable condition not being satisfied and a difference between the SFN value corresponding to the PDCP data packet received by the terminal device and the SFN value of the applicable condition being k, generating updated HFN information by updating the HFN information based on the difference k; and
determining the HFN value of the PDCP entity based on the updated HFN information.

13. The method of any one of claims 1 to 10, wherein the indication information further comprises an update mode of the HFN information, and determining the HFN value of the PDCP entity based on the HFN information comprises:
in response to the applicable condition not being satisfied, generating updated HFN information by updating the HFN information based on the update mode; and
determining the HFN value of the PDCP entity based on the updated HFN information.

14. The method of claim 13, wherein the update mode comprises an update step size and an update direction.

15. The method of any one of claims 1 to 14, wherein receiving the indication information sent by the network device comprises:
receiving, based on a system message, the indication information sent by the network device;
or,
receiving, based on a multicast broadcast service (MBS) control channel message, the indication information sent by the network device;
or,
receiving, based on a dedicated configuration message of the terminal device, the indication information sent by the network device.

16. The method of any one of claims 1 to 14, wherein the indication information further comprises multicast broadcast service (MBS) service information, and determining the HFN value of the PDCP entity based on the HFN information comprises:
determining the HFN value of the PDCP entity corresponding to the MBS service information based on the HFN information.

17. The method of claim 16, wherein the MBS service information comprises at least one of a MBS service identifier (ID), a MBS bearer ID, or protocol entity configuration information of a MBS bearer.

18. The method of claim 16, further comprising:
decrypting or verifying an integrity of received data corresponding to the MBS service information based on the HFN information.

19. The method of any one of claims 1 to 18, wherein determining the HFN value of the PDCP entity based on the HFN information comprises:
in response to the terminal device being a device newly accessing a multicast broadcast service (MBS) service, determining the HFN value of the PDCP entity based on the HFN information.

20. A method for determining a hyper frame number (HFN) of a packet data convergence protocol (PDCP) entity, performed by a network device, comprising:
sending indication information to a terminal device, wherein the indication information comprises HFN information.

21. The method of claim 20, wherein the HFN information comprises any one of a HFN value or a count value (COUNT).

22. The method of claim 20, further comprising:
sending an applicable condition of the HFN information to the terminal device.

23. The method of claim 22, wherein the applicable condition of the HFN information comprises any one of a sequence number (SN) value or a system frame number (SFN) value.

24. The method of claim 23, wherein the SN value comprises any one of:
a minimum SN value;
a maximum SN value;
the minimum SN value and the maximum SN value;
a section number corresponding to the SN value; or
a parameter pair (m, n) corresponding to the SN value, wherein m denotes a number of sections after equally segmenting all the SN values into sections in a specified order, n denotes a section number of a section containing a current SN value among the m sections, and n is an integer less than or equal to m.

25. The method of claim 23, wherein the SFN value comprises any one of:
a minimum SFN value;
a maximum SFN value;
the minimum SFN value and the maximum SFN value;
a section number corresponding to the SFN value; or
a parameter pair (i, j) corresponding to the SFN value, wherein i denotes a number of sections after equally segmenting all the SFN values into sections in a specified order, j denotes a section number of a section containing a current SFN value among the i sections, and j is an integer less than or equal to i.

26. The method of claim 20, wherein the indication information further comprises multicast broadcast service (MBS) service information.

27. The method of claim 26, wherein the MBS service information comprises at least one of a MBS service identifier (ID), a MBS bearer ID, or protocol entity configuration information of a MBS bearer.

28. The method of claim 20, wherein the indication information further comprises an update mode of the HFN information.

29. The method of claim 28, wherein the update mode comprises an update step size and an update direction.

30. The method of any one of claims 20 to 29, wherein sending the indication information to the terminal device comprises:
sending the indication information to the terminal device based on a system message;
or,
sending the indication information to the terminal device based on a multicast broadcast service (MBS) control channel message;
or,
sending the indication information to the terminal device based on a dedicated configuration message of the terminal device.

31. The method of claim 30, further comprising:
in response to an information change in the system message other than the HFN information, sending first change indication information to the terminal device;
or,
in response to an information change in the MBS control channel message other than the HFN information, sending second change indication information to the terminal device.

32. A communication device, configured on a terminal device side, comprising:
a transceiver module, configured to receive indication information sent by a network device, wherein the indication information comprises hyper frame number (HFN) information; and
a processing module, configured to determine a HFN value of a packet data convergence protocol (PDCP) entity based on the HFN information.

33. A communication device, configured on a network device side, comprising:
a transceiver module, configured to send indication information to a terminal device, wherein the indication information comprises hyper frame number (HFN) information.

34. A communicating device comprising a processor and a memory, wherein the memory is configured to store computer programs stored therein, and the processor is configured to execute the computer programs stored in the memory to cause the device to perform the method of any one of claims 1 to 19 or the method of any one of claims 20 to 31.

35. A communicating device, comprising: a processor and an interface circuit, wherein
the interface circuit is configured to receive code instructions and transmit the code instructions to the processor; and
the processor is configured to run the code instructions to perform the method of any one of claims 1 to 19 or the method of any one of claims 20 to 31.

36. A computer-readable storage medium, having instructions stored thereon, wherein when the instructions are executed, the method of any one of claims 1 to 19 or the method of any one of claims 20 to 31 is performed.
